# EUROPÄISCHE PATENTSCHRIFT

(11) **EP 3 539 142 B1**
(45) Veröffentlichungstag und Bekanntmachung des Hinweises auf die Patenterteilung: **24.01.2024**
(21) Anmeldenummer: 17797308.8
(22) Anmeldetag: 07.11.2017
(51) Int. Cl.: H01H 50/02, H01H 50/54

(54) **LEISTUNGSSCHÜTZ UND VERFAHREN ZUR HERSTELLUNG EINES GEHÄUSEKÖRPERS FÜR DAS LEISTUNGSSCHÜTZ**
POWER CONTACTOR AND METHOD FOR PRODUCING A HOUSING BODY FOR THE POWER CONTACTOR
CONTACTEUR DE PUISSANCE ET PROCÉDÉ DE FABRICATION D'UN CORPS DE BOÎTIER POUR LE CONTACTEUR DE PUISSANCE

(30) Priorität: 08.11.2016 DE 102016121345
(43) Veröffentlichungstag der Anmeldung: 18.09.2019
(73) Patentinhaber: TDK Electronics AG, 81671 München (DE)
(72) Erfinder: HOFFMANN, Robert, 12163 Berlin (DE)
(74) Vertreter: Epping - Hermann - Fischer
(86) Internationale Anmeldenummer: PCT/EP2017/078441
(87) Internationale Veröffentlichungsnummer: WO 2018/087075

(56) Entgegenhaltungen:
- EP-A1- 1 754 563
- EP-A1- 2 975 626
- CN-B- 101 593 638
- CN-U- 204 067 227
- JP-U- S57 123 968

## Beschreibung

Die vorliegende Erfindung betrifft ein Leistungsschütz sowie ein Verfahren zur Herstellung eines Gehäusekörpers für das Leistungsschütz.

Leistungsschütze sind elektrisch betriebene, fern betätigbare Schalter. Sie verfügen über einen Steuerstromkreis, der einen Laststromkreis ein- und ausschalten kann.

Eine mögliche Anwendung von Leistungsschützen ist das Öffnen und Trennen von Batteriestromkreisen in Elektrokraftfahrzeugen. Dabei werden in der Regel sowohl der Plus- als auch der Minuskontakt einer Batterie mit Hilfe eines Leistungsschützes getrennt. Die Auftrennung erfolgt im Ruhezustand des Fahrzeuges und im Fall einer Störung, beispielsweise eines Unfalls. Dabei ist es die Hauptaufgabe des Leistungsschützes, das Fahrzeug spannungsfrei zu schalten und den Stromfluss zu unterbrechen.

Durch Übergangswiderstände innerhalb des Leistungsschützes erwärmt sich der Leistungsschütz. Eine überhöhte Erwärmung kann zu einer Beschädigung und letztendlich zu einem Ausfall des Leistungsschützes führen.

In der Regel erfolgt eine geeignete Auslegung des Leistungsschützes, von Zuleitungen und Befestigungsmittel, so dass eine überhöhte Erwärmung im Normalbetrieb nicht auftreten kann. Es können jedoch Störfälle auftreten, die durch solch eine Auslegung nicht abgefangen werden können, zum Beispiel können aufgrund von Verschleiß höhere Übergangswiderstände im Innern des Leistungsschützes entstehen, die bereits bei geringen Strömen zu einer hohen Erwärmung führen können. Solche Störstellen können von außen nicht erkannt werden.

CN101593638 B offenbart einen bekannten Leistungsschütz mit Erwärmungsschutz gemäß dem Oberbegriff des Anspruchs 1.

Die Aufgabe, die der Erfindung zu Grunde liegt, ist es, ein Leistungsschütz zu schaffen, das einen Beitrag dazu leistet, eine Zuverlässigkeit des Leistungsschützes zu erhöhen, insbesondere einen Beitrag dazu leistet, Funktionsausfälle des Leistungsschützes aufgrund von Überhitzung zuverlässig zu vermeiden. Eine weitere Aufgabe ist es, ein Verfahren zur Herstellung eines Gehäusekörpers für das Leistungsschütz zu schaffen, das eine kostengünstige Herstellung des Leistungsschützes ermöglicht.

Die erstgenannte Aufgabe wird gelöst durch die Merkmale des ersten unabhängigen Patentanspruchs. Die zweite Aufgabe wird durch ein Verfahren gemäß dem zweiten unabhängigen Anspruch gelöst. Vorteilhafte Weiterbildungen der Erfindung sind in den Unteransprüchen gekennzeichnet.

Die Erfindung zeichnet sich gemäß einem ersten Aspekt aus durch ein Leistungsschütz, gemäß den Merkmalen des unabhängigen Anspruchs 1. Weitere bevorzugte Ausbildungen des Leistungsschützes sind in den abhängigen Ansprüchen definiert. J

Die Integration des Temperatursensors in das Leistungsschütz hat den Vorteil, dass auch eine absolute Temperatur des Leistungsschützes erfasst oder ermittelt werden kann, da eine Geometrie und ein innerer Aufbau des Leistungsschützes unverändert sind und mittels einer Kalibrierung von einer ausgegebenen Temperatur des Temperatursensors auf eine tatsächliche Kontakttemperatur schließen kann.

Durch die Integration des Temperatursensors in das Leistungsschütz bilden Temperatursensor und Leistungsschütz eine einzige funktionale Einheit. Sie können zusammen gefertigt werden und aufeinander abgestimmt werden. So kann etwa der Temperatursensor derart kalibriert werden, dass das spezifische Temperaturverhalten des Leistungsschützes berücksichtigt werden kann. Ferner wird die Montage des Leistungsschützes und des Temperatursensors, beispielsweise in einer Battery Disconnect Unit, wesentlich vereinfacht, da diese Bauteile nun als Einheit gemeinsam montiert werden können.

Der Temperatursensor kann als integriert in das Leistungsschütz bezeichnet werden, wenn das Leistungsschütz und der Temperatursensor in unmittelbarer räumlicher Nähe zueinander angeordnet sind. Insbesondere können das Leistungsschütz und der Temperatursensor von einem gemeinsamen Gehäuse umschlossen sein und/oder in einem gemeinsamen Gehäuse angeordnet sein. Es ist somit nicht erforderlich, dass der Temperatursensor außen am Gehäuse und/oder an einem oder mehreren äußeren Kontakten des Leistungsschützes angeordnet oder befestigt wird.

Das Leistungsschütz und der Temperatursensor können zusammen gefertigt werden. Das Leistungsschütz und der Temperatursensor können als gemeinsame Einheit an einen Anwender geliefert werden. Durch den hohen Grad der Integration wird kaum zusätzlicher Bauraum für den Temperatursensor benötigt. Dadurch kann das Leistungsschütz mit dem integrierten Temperatursensor insbesondere bei Anwendungen vorteilhaft sein, bei denen nur ein sehr begrenzter Platz zur Verfügung steht.

Vorzugsweise ist der vorgegebene Abstand so gewählt, dass eine Zeitdauer für eine Wärmeausbreitung von dem oder den elektrischen Kontakten eine vorgegebene Dauer nicht überschreitet und/oder eine Wärmeabfuhr, zum Beispiel an die Umgebung, gering ist, das heißt einen vorgegebenen Schwellenwert nicht überschreitet, und/oder die Wärmeabfuhr mit einer vorgegebenen Genauigkeit ermittelt werden kann und durch eine Kalibrierung berücksichtigt werden kann.

Erfindungsgemäß umfasst das Leistungsschütz eine Kontaktkammervorrichtung mit einem Gehäusekörper und einer Kontaktkammer. In der Kontaktkammer ist das Schaltelement zumindest teilweise angeordnet. Der Gehäuseköper umschließt die Kontaktkammer zumindest teilweise und in dem Gehäusekörper ist der Temperatursensor angeordnet. Dies hat den Vorteil, dass der Temperatursensor in der Nähe der Wärmequellen, insbesondere in der Nähe der elektrischen Kontakte, angeordnet ist. Die Temperatur des Leistungsschützes kann mit geringer Verzögerungszeit gemessen werden. Die Verringerung der Verzögerungszeiten hat den weiteren Vorteil, dass eine Regelung des Leistungsschützes in Abhängigkeit der Temperatur vereinfacht werden kann. In der Kontaktkammer ist insbesondere eine Kontaktbrücke des Schaltelements angeordnet.

In einer vorteilhaften Ausgestaltung gemäß dem ersten Aspekt weist der Gehäusekörper einen keramischen Werkstoff auf oder besteht aus einem keramischen Werkstoff. Vorteilhafterweise weist so der Gehäusekörper eine hohe Temperaturfestigkeit und sehr gute elektrische Isolationseigenschaften auf. Dadurch, dass der Temperatursensor in den keramischen Gehäusekörper eingebracht ist, ist der Temperatursensor von einem Potential, das an den Kontakten des Leistungsschützes anliegt, getrennt.

In einer weiteren vorteilhaften Ausgestaltung gemäß dem ersten Aspekt weist der Gehäusekörper der Kontaktkammervorrichtung eine Bodenwand auf und die Aussparung ist in der Bodenwand angeordnet. Die Bodenwand umfasst hierbei eine erste Öffnung, durch die der erste elektrische Kontakt geführt wird, und eine zweite Öffnung, durch die der zweite elektrische Kontakt geführt wird. Die Anordnung der Aussparung in der Bodenwand ermöglicht vorteilhafterweise, den Temperatursensor in der Nähe der Kontakte anzuordnen und trotzdem eine gute elektrische Isolation des Temperatursensors von den elektrischen Kontakten des Leistungsschützes sicherzustellen. In einer weiteren vorteilhaften Ausgestaltung gemäß dem ersten Aspekt weist der Gehäusekörper der Kontaktkammervorrichtung eine Seitenwand auf und die Aussparung ist in der Seitenwand des Gehäusekörpers angeordnet. Die Anordnung der Aussparung in der Seitenwand ermöglicht vorteilhafterweise, den Temperatursensor in unmittelbarer Nähe, in der Nähe der elektrischen Kontakte, der Wärmequelle anzuordnen und trotzdem eine gute elektrische Isolation des Temperatursensors von den elektrischen Kontakten des Leistungsschützes sicherzustellen.

In einer weiteren vorteilhaften Ausgestaltung gemäß dem ersten Aspekt umfasst der Gehäusekörper der Kontaktkammervorrichtung eine Seitenwand und eine Bodenwand. Die Aussparung ist in einem Kantenbereich, in dem die Bodenwand und die Seitenwand zusammentreffen, angeordnet. Die Bodenwand umfasst eine erste Öffnung, durch die der erste elektrische Kontakt geführt wird, und eine zweite Öffnung, durch die der zweite elektrische Kontakt geführt wird. Die Anordnung der Aussparung in dem Kantenbereich ermöglicht vorteilhafterweise zum einen, den Temperatursensor in unmittelbarer Nähe der Wärmequelle anzuordnen und trotzdem eine gute elektrische Isolation des Temperatursensors von den elektrischen Kontakten des Leistungsschützes sicherzustellen. Des Weiteren ermöglicht die Anordnung der Aussparung in dem Kantenbereich eine kostengünstige Herstellung des Gehäusekörpers und eine einfache Befestigung des Temperatursensors. Insbesondere ermöglicht solch eine Anordnung eine vereinfachte und zuverlässige Herstellung eines Keramik-Grünlings für den Gehäusekörper, insbesondere bei Nutzung einer Trockenverpressung zur Herstellung des Keramik-Grünlings.

In einer weiteren vorteilhaften Ausgestaltung gemäß dem ersten Aspekt ist die Aussparung als eine prismenförmige Vertiefung mit dreieckförmiger Grundfläche ausgebildet. Dies ermöglicht eine kostengünstige Herstellung des Gehäusekörpers und eine einfache Befestigung des Temperatursensors. Insbesondere ermöglicht solch eine Anordnung eine vereinfachte und zuverlässige Herstellung eines Keramik-Grünlings für den Gehäusekörper, insbesondere bei Nutzung einer Trockenverpressung zur Herstellung des Keramik-Grünlings. Die Aussparung kann sehr einfach und präzise ausgebildet werden.

In einer weiteren vorteilhaften Ausgestaltung ist der Temperatursensor mittels eines Klebers, der einen gleichen oder ähnlichen Wärmeausdehnungskoeffizient wie der Werkstoff des Gehäusekörpers aufweist und damit an eine thermische Expansion des Gehäusekörpers angepasst ist, an dem Gehäusekörper befestigt. Dies hat den Vorteil, dass thermische Spannungen vermieden oder zumindest vermindert werden können und somit eine Zuverlässigkeit der Verbindung zwischen dem Temperatursensor und dem Gehäusekörpers erhöht werden kann.

Die Erfindung zeichnet sich gemäß einem zweiten Aspekt aus durch ein Verfahren zur Herstellung eines Gehäusekörpers für eine Kontaktkammervorrichtung eines Leistungsschützes gemäß dem ersten Aspekt. Hierbei wird ein Gehäusekörper-Grünling für die Kontaktkammervorrichtung durch Trockenverpressung eines Keramikpulvers hergestellt und der Gehäusekörper-Grünling weist die Aussparung zur Aufnahme des Temperatursensors bereits auf. Der Gehäusekörper-Grünling wird anschließend gesintert. Dies bedeutet, dass eine negative Pressform für den Gehäusekörper derart ausgebildet ist, insbesondere eine Erhebung aufweist, dass die Aussparung während des Herstellungsschrittes des Trockenverpressens in dem Gehäusekörper-Grünling entsteht und nicht in einem weiteren Herstellungsschritt gebildet werden muss. Vorteilhafterweise ermöglicht dies, das Leistungsschütz mit dem Temperatursensor, insbesondere den Gehäusekörper für das Leistungsschütz, kostengünstig herzustellen.

Ausführungsbeispiele der Erfindung sind im Folgenden anhand der schematischen Zeichnungen erläutert.

Es zeigen:
Figur 1 ein Ausführungsbeispiel eines Leistungsschützes,
Figur 2 eine Querschnittsansicht einer Kontaktkammervorrichtung des Leistungsschützes und
Figur 3a bis 3c jeweils eine perspektivische Ansicht eines Ausführungsbeispiel des Gehäusekörpers der Kontaktkammervorrichtung.

Elemente gleicher Konstruktion oder Funktion sind figurenübergreifend mit den gleichen Bezugszeichen versehen.

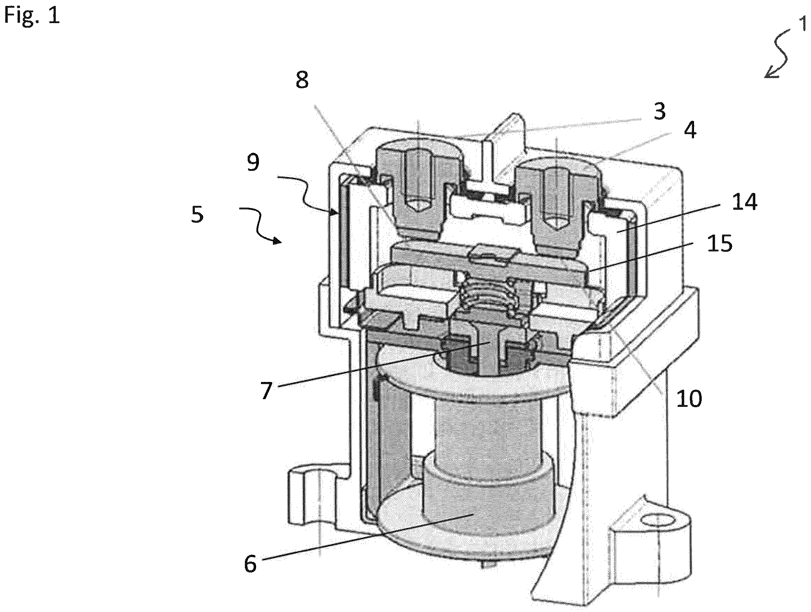

Figur 1 zeigt ein Ausführungsbeispiel eines Leistungsschützes.

Das Leistungsschütz 1 umfasst ein Schaltelement 5 und eine Kontaktkammervorrichtung 9. Das Schaltelement 5 umfasst beispielsweise einen Magnetantrieb mit zumindest einer Spule 6 und einem Stößel 7, der in der zumindest einen Spule 6 angeordnet ist, sowie und eine bewegliche Kontaktbrücke 8. Die Spule 6 kann von außen mit einer Spannung beaufschlagt werden, um ein Magnetfeld in dem Stößel 7 zu erzeugen, wodurch der Stößel 7 axial entlang seiner Längsachse in Richtung der Kontaktkammervorrichtung 9 bewegbar ist. Die Spule 6 und der Stößel 7 sind vorzugsweise innerhalb eines magnetisierbaren Jochs angeordnet.

Die Kontaktkammervorrichtung 9 umfasst einen ersten elektrischen Kontakt 3, einen zweiten elektrischen Kontakt 4, einen Gehäusekörper 14 und eine Kontaktkammer 15.

Das Schaltelement 5, insbesondere der Stößel 7, ist angeordnet und ausgebildet, abhängig von einer Bestromung der Spule 6, die Kontaktbrücke 8 der Kontaktkammervorrichtung 9 zwischen einer ersten Stellung, in der die Kontaktbrücke 8 den ersten elektrischen Kontakt 3 und den zweiten elektrischen Kontakt 4 leitend verbindet, und einer zweiten Stellung, in der der erste elektrische Kontakt 3 und der zweite elektrische Kontakt 4 isoliert sind, umzuschalten. Der erste und zweite elektrische Kontakt 3, 4 weisen jeweils einen inneren Kontakt 16, 17 und einen äußeren Kontakt 18, 19 auf.

Das Leistungsschütz 1 weist mehrere Übergangswiderstände auf, zum Beispiel:
- Einen inneren Übergangswiderstand zwischen inneren Kontaktflächen 10 der inneren Kontakte 16, 17 und der beweglichen Kontaktbrücke 8 und/oder
- einen ersten äußeren Übergangswiderstand zwischen einem der äußeren Kontakte 18, 19 und daran befestigten Leitungen und/oder Unterlegscheiben und/oder Sprengringe und/oder
- einen zweiten äußeren Übergangswiderstand zwischen einem der äußeren Kontakte 18, 19, der Teil des Leistungsschützes 1 ist und einer Anschlussleitung, zum Beispiel einer Kupferschiene.

Durch die Übergangswiderstände erwärmt sich das Leistungsschütz 1 bei Durchströmung im Betrieb. Eine überhöhte Erwärmung kann zu einer Beschädigung und letztendlich zum Ausfall des Leistungsschützes 1 führen. Die Höhe der Erwärmung ist in der Regel durch geeignete Auslegung des Leistungsschützes 1 und dessen Zuleitungen sowie der Befestigungstechniken berücksichtigt. Jedoch kann es von außen zu Beeinflussungen kommen. Beispielsweise kann sich durch Vibrationen verursacht eine Anpresskraft einer Zuleitung auf eine der äußeren Kontakte 18 ,19 verringern, wodurch ein höherer Übergangswiderstand entstehen kann, der auch bei niedrigen Strömen eine hohe Erwärmung zur Folge haben kann.

Ferner kann sich der innere Übergangswiderstand durch wiederholtes Abschalten unter Last und einem damit einhergehenden Abbrand der inneren Kontaktflächen 10 erhöhen. Dieser Effekt ist von außen nicht zu erkennen.

Weiterhin kann eine zusätzliche Erwärmung durch eine unsachgemäße Befestigung, zum Beispiel aufgrund einer äußeren unsachgemäßen Befestigung eines Stromkabels an einem der äußeren Kontakte 18, 19 des Leistungsschützes 1, verursacht werden. Die unsachgemäße Befestigung kann beispielsweise verursacht werden durch einen zu kleinen Kabelschuh, die Verwendung von Unterlegscheiben und/oder einen zu geringen Leitungsquerschnitt.

Da Leistungsschütze 1 in den überwiegenden Fällen eine Sicherungsaufgabe erfüllen, ist eine zuverlässige Überwachung der Temperatur des Leistungsschützes 1 zumindest gewünscht.

Zur Erfassung einer Temperatur des Leistungsschützes 1 weist das Leistungsschütz 1 zumindest einen integrierten Temperatursensor 12 auf.

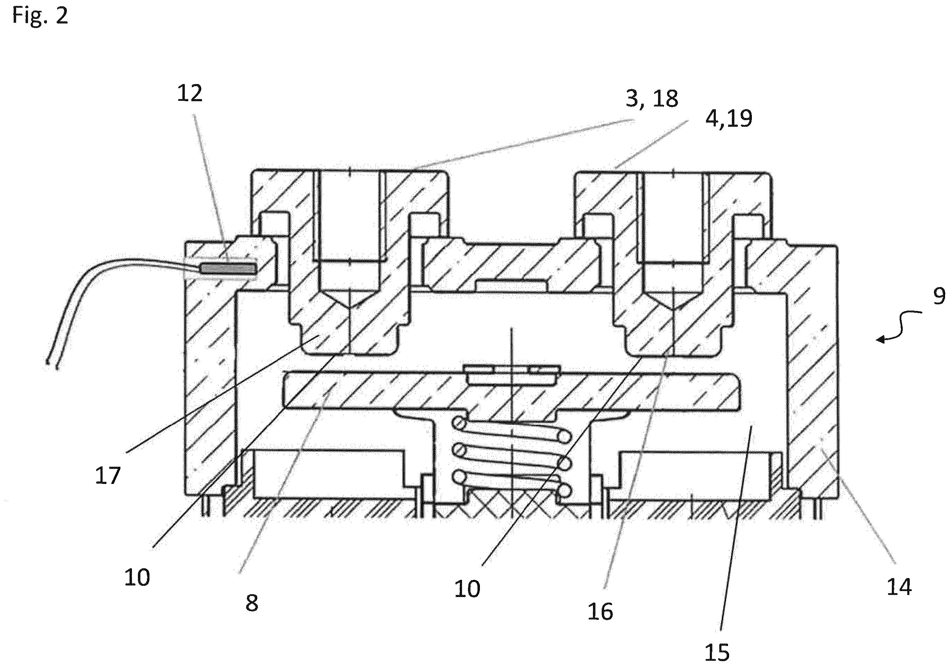

Figur 2 zeigt eine Querschnittsansicht der Kontaktkammervorrichtung 9.

In der Kontaktkammer 15 der Kontaktkammervorrichtung 9 befindet sich vorzugsweise ein Gas. Die Kontaktkammervorrichtung 9 umfasst einen Gehäusekörper 14, der beispielsweise zusammen mit einem Deckel die Kontaktkammer 15 bildet.

Der Gehäusekörper 14 weist beispielsweise in etwa die Form eines ausgehöhlten Quaders beziehungsweise eines "Trogs" auf und ist an einer Seite geöffnet. Der Gehäusekörper 14 weist beispielsweise eine Bodenwand 21 und eine umlaufende Seitenwand 27 auf. Der Gehäusekörper 14 umfasst oder besteht aus einem Keramikwerkstoff, beispielsweise einem Werkstoff auf der Basis von Titanoxid oder Aluminiumoxid. Der Gehäusekörper 14 ist vorzugweise mittels eines Trockenpressverfahrens hergestellt. Der Keramikwerkstoff hat den Vorteil, dass er unempfindlich gegenüber hohen Temperaturen und einer Lichtbogenbeflammung ist, nicht oxidiert und gute elektrische Isolationseigenschaften aufweist.

Der Gehäusekörpers 14 weist entlang der Öffnung beispielsweise einen umlaufenden Spund auf. Die der Öffnung des Gehäusekörpers 14 der Kontaktkammervorrichtung 9 gegenüberliegende Bodenwand 21 weist eine erste Öffnung 23 und eine zweite Öffnung 25 auf, durch die der erste elektrische Kontakt 3 und der zweite elektrische Kontakt 4 geführt werden.

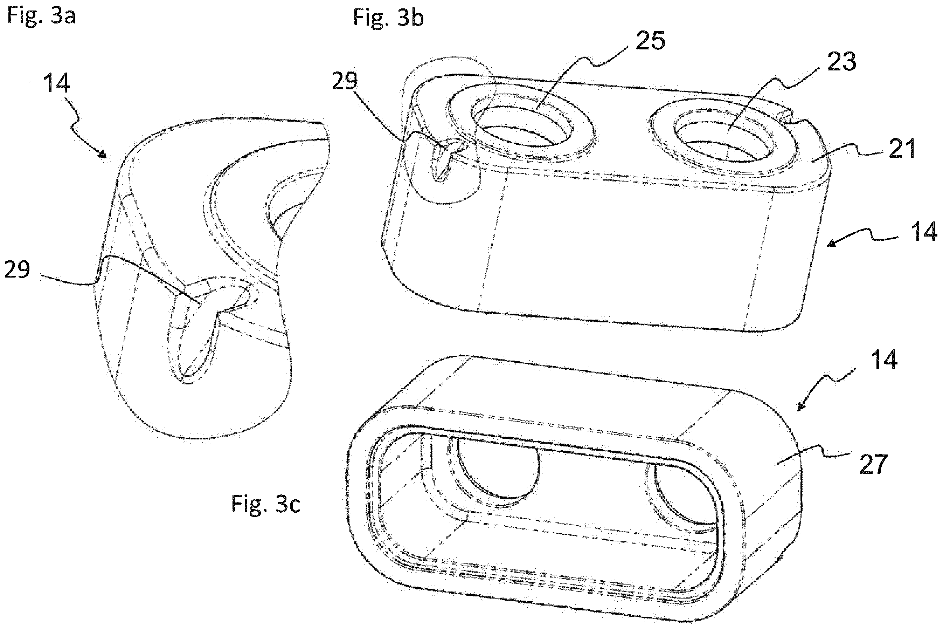

In die Kontaktkammervorrichtung 9 ist ein Temperatursensor 12 integriert. Hierzu weist der Gehäusekörper 14 eine Aussparung 29 zur Aufnahme des Temperatursensors 12 auf. Figur 3a bis 3c zeigen jeweils eine perspektivische Ansicht eines Ausführungsbeispiels des Gehäusekörpers 14 der Kontaktkammervorrichtung 9.

Die Aussparung 29 ist beispielsweise in der Bodenwand 21 oder in der Seitenwand 27 angeordnet. Alternativ kann die Aussparung 29 in einem Kantenbereich, in dem die Bodenwand 21 und die umlaufende Seitenwand 27 zusammentreffen, angeordnet sein.

Die Aussparung 29 umfasst beispielsweise eine prismenförmige Vertiefung mit dreieckförmiger Grundfläche.

Der Temperatursensor 12 wird vorzugsweise mittels Kleben in der Aussparung 29 des Gehäuseköpers befestigt. Beispielsweise wird der Temperatursensor 12 mittels eines Klebers, der einen gleichen oder ähnlichen Wärmeausdehnungskoeffizient wie der Werkstoff des Gehäusekörpers aufweist und damit an eine thermische Expansion des Gehäusekörpers angepasst ist, an dem Gehäusekörper befestigt ist. Der Gehäusekörper kann beispielsweise einen Wärmeausdehnungskoeffizient aufweisen, der im Bereich von 5·10⁻⁶ 1/K bis 9·10⁻⁶ 1/K liegt und der Kleber kann beispielsweise einen Wärmeausdehnungskoeffizient aufweisen, der im Bereich von 2·10⁻⁶ 1/K bis 20·10⁻⁶ 1/K liegt.

Der Temperatursensor 12 weist beispielsweise einen Widerstand mit einem positiven Temperaturkoeffizienten auf.

### Bezugszeichenliste

- 1: Leistungsschütz
- 2: Antriebseinheit
- 3: erster elektrischer Kontakt
- 4: zweiter elektrischer Kontakt
- 5: Schaltelement
- 6: Spule
- 7: Stößel
- 8: Kontaktbrücke
- 9: Kontaktkammervorrichtung
- 10: Kontaktfläche
- 12: Temperatursensor
- 14: Gehäusekörper
- 15: Kontaktkammer
- 16,17: innerer Kontakt
- 18,19: äußerer Kontakt
- 21: Bodenwand
- 23: erste Öffnung
- 25: zweite Öffnung
- 27: Seitenwand
- 29: Aussparung

## Patentansprüche

1. Leistungsschütz (1), aufweisend
- einen ersten elektrischen Kontakt (3) und einen zweiten elektrischen Kontakt (4),
- ein Schaltelement (5), das eine geöffnete Stellung und eine geschlossene Stellung einnehmen kann, wobei das Schaltelement (5) in der geschlossenen Stellung den ersten elektrischen Kontakt (3) und den zweiten elektrischen Kontakt (4) miteinander kontaktiert und wobei der erste elektrische Kontakt (4) und der zweite elektrische Kontakt (4) voneinander isoliert sind, wenn das Schaltelement (5) sich in der geöffneten Stellung befindet,
- zumindest einen in das Leistungsschütz (1) integrierten Temperatursensor (12), der dazu ausgestaltet ist, eine Temperatur des Leistungsschützes (1) in einem vorgegebenen Abstand von dem ersten elektrischen Kontakt (3) und/oder dem zweiten elektrischen Kontakt (4) zu erfassen, und
- eine Kontaktkammervorrichtung (9) mit einem Gehäusekörper (14) und einer Kontaktkammer (15), in der das Schaltelement (5) zumindest teilweise angeordnet ist, wobei der Gehäusekörper die Kontaktkammer (15) zumindest teilweise umschließt,
wobei in einer Wand des Gehäusekörpers (14) der Temperatursensor (12) angeordnet ist, **dadurch gekennzeichnet, dass** der Gehäusekörper (14) in der Wand, in der Nähe der elektrischen Kontakte (3,4), eine nach außen offene Aussparung (29) aufweist und der Temperatursensor (12) in der Aussparung (29) angeordnet ist.

2. Leistungsschütz (1) nach Anspruch 1,
wobei der Gehäusekörper (14) einen keramischen Werkstoff aufweist oder aus einem keramischen Werkstoff besteht.

3. Leistungsschütz (1) nach Anspruch 1 oder 2,
bei dem der Gehäusekörper (14) der Kontaktkammervorrichtung (9) eine Bodenwand (21) mit einer ersten Öffnung (23), durch die der erste elektrische Kontakt (3) geführt wird, und eine zweite Öffnung (25), durch die der zweite elektrische Kontakt (4) geführt wird, aufweist und die Aussparung (29) in der Bodenwand (21) des Gehäusekörpers (14) angeordnet ist.

4. Leistungsschütz (1) nach einem der vorherigen Ansprüche, bei dem der Gehäusekörper (14) der Kontaktkammervorrichtung (9) eine Seitenwand (27) aufweist und die Aussparung (29) in der Seitenwand (27) des Gehäusekörpers (14) angeordnet ist.

5. Leistungsschütz (1) nach einem der vorhergehenden Ansprüche,
bei dem
- der Gehäusekörper (14) der Kontaktkammervorrichtung (9) eine Seitenwand (27) und eine Bodenwand (21) umfasst, wobei die Bodenwand (21) eine erste Öffnung (23), durch die der erste elektrische Kontakt (3) geführt wird, und eine zweite Öffnung (25), durch die der zweite elektrische Kontakt (4) geführt wird, aufweist, und
- die Aussparung (29) in einem Kantenbereich, in dem die Bodenwand (21) und die Seitenwand (27) zusammentreffen, angeordnet ist.

6. Leistungsschütz (1) nach einem der vorhergehenden Ansprüche,
bei dem die Aussparung (29) als eine prismenförmige Vertiefung mit dreieckförmiger Grundfläche ausgebildet ist.

7. Leistungsschütz (1) nach einem der vorhergehenden Ansprüche,
bei dem der Temperatursensor (12) mittels eines Klebers, der einen gleichen oder ähnlichen Wärmeausdehnungskoeffizient wie der Werkstoff des Gehäusekörpers (14) aufweist und damit an eine thermische Expansion des Gehäusekörpers (14) angepasst ist, an dem Gehäusekörper befestigt ist.

8. Verfahren zur Herstellung eines Gehäusekörpers (14) für eine Kontaktkammervorrichtung (9) eines Leistungsschützes (1) nach einem der Ansprüche 1 bis 7, bei dem ein Gehäusekörper-Grünling für die Kontaktkammervorrichtung (9) durch Trockenverpressung eines Keramikpulvers hergestellt wird, wobei der Gehäusekörper-Grünling die Aussparung (29) zur Aufnahme des Temperatursensors (12) bereits aufweist und der Gehäusekörper-Grünling anschließend gesintert wird.

## Claims

1. Power contactor (1) having
- a first electrical contact (3) and a second electrical contact (4),
- a switching element (5), which can adopt an open position and a closed position, wherein the switching element (5) contact-connects the first electrical contact (3) and the second electrical contact (4) to each other in the closed position, and wherein the first electrical contact (4) and the second electrical contact (4) are isolated from one another when the switching element (5) is in the open position,
- at least one temperature sensor (12), which is integrated into the power contactor (1) and is designed to detect a temperature of the power contactor (1) at a predefined distance from the first electrical contact (3) and/or the second electrical contact (4), and
- a contact chamber device (9) having a housing body (14) and a contact chamber (15) in which the switching element (5) is at least partially arranged, wherein the housing body at least partially surrounds the contact chamber (15), wherein the temperature sensor (12) is arranged in a wall of the housing body (14), **characterized in that** the housing body (14) has a recess (29), which is open to the outside, in the wall in the vicinity of the electrical contacts (3, 4) and the temperature sensor (12) is arranged in the recess (29).

2. Power contactor (1) according to Claim 1, wherein the housing body (14) comprises a ceramic material or consists of a ceramic material.

3. Power contactor (1) according to Claim 1 or 2, in which the housing body (14) of the contact chamber device (9) has a bottom wall (21) with a first opening (23), through which the first electrical contact (3) is guided, and a second opening (25), through which the second electrical contact (4) is guided, and the recess (29) is arranged in the bottom wall (21) of the housing body (14) .

4. Power contactor (1) according to one of the preceding claims, in which the housing body (14) of the contact chamber device (9) has a side wall (27) and the recess (29) is arranged in the side wall (27) of the housing body (14).

5. Power contactor (1) according to one of the preceding claims, in which
- the housing body (14) of the contact chamber device (9) comprises a side wall (27) and a bottom wall (21), wherein the bottom wall (21) has a first opening (23), through which the first electrical contact (3) is guided, and a second opening (25), through which the second electrical contact (4) is guided, and
- the recess (29) is arranged in an edge region, in which the bottom wall (21) and the side wall (27) meet.

6. Power contactor (1) according to one of the preceding claims, in which the recess (29) is designed as a prismatic recess with a triangular base surface.

7. Power contactor (1) according to one of the preceding claims, in which the temperature sensor (12) is fastened to the housing body by means of an adhesive, which has the same or a similar coefficient of thermal expansion as the material of the housing body (14) and therefore is adapted to a thermal expansion of the housing body (14).

8. Method for producing a housing body (14) for a contact chamber device (9) of a power contactor (1) according to one of Claims 1 to 7, in which a housing body green compact for the contact chamber device (9) is produced by dry compression of a ceramic powder, wherein the housing body green compact already comprises the recess (29) for receiving the temperature sensor (12) and the housing body green compact is then sintered.

## Revendications

1. Contacteur de puissance (1), présentant
- un premier contact électrique (3) et un deuxième contact électrique (4),
- un élément de commutation (5) qui peut occuper une position ouverte et une position fermée, dans lequel, dans la position fermée, l'élément de commutation (5) met le premier contact électrique (3) et le deuxième contact électrique (4) en contact l'un avec l'autre, et dans lequel le premier contact électrique (4) et le deuxième contact électrique (4) sont isolés l'un de l'autre lorsque l'élément de commutation (5) se trouve dans la position ouverte,
- au moins un capteur de température (12) intégré dans le contacteur de puissance (1), qui est configuré pour détecter une température du contacteur de puissance (1) à une distance prédéfinie du premier contact électrique (3) et/ou du deuxième contact électrique (4), et
- un dispositif de chambre de contact (9) pourvu d'un corps de boîtier (14) et d'une chambre de contact (15) dans laquelle l'élément de commutation (5) est disposé au moins partiellement, dans lequel le corps de boîtier enferme la chambre de contact (15) au moins partiellement, dans lequel le capteur de température (12) est disposé dans une paroi du corps de boîtier (14),
**caractérisé en ce que** le corps de boîtier (14) présente dans la paroi, à proximité des contacts électriques (3, 4), un évidement (20) ouvert vers l'extérieur, et le capteur de température (12) est disposé dans l'évidement (29).

2. Contacteur de puissance (1) selon la revendication 1, dans lequel le corps de boîtier (14) présente un matériau céramique ou est composé d'un matériau céramique.

3. Contacteur de puissance (1) selon la revendication 1 ou 2, dans lequel le corps de boîtier (14) du dispositif de chambre de contact (9) présente une paroi de fond (21) pourvue d'une première ouverture (23) à travers laquelle passe le premier contact électrique (3), et d'une deuxième ouverture (25) à travers laquelle passe le deuxième contact électrique (4), et l'évidement (29) est disposé dans la paroi de fond (21) du corps de boîtier (14).

4. Contacteur de puissance (1) selon l'une quelconque des revendications précédentes, dans lequel le corps de boîtier (14) du dispositif de chambre de contact (9) présente une paroi latérale (27), et l'évidement (29) est disposé dans la paroi latérale (27) du corps de boîtier (14).

5. Contacteur de puissance (1) selon l'une quelconque des revendications précédentes, dans lequel
- le corps de boîtier (14) du dispositif de chambre de contact (9) comprend une paroi latérale (27) et une paroi de fond (21), dans lequel la paroi de fond (21) présente une première ouverture (23) à travers laquelle passe le premier contact électrique (3), et une deuxième ouverture (25) à travers laquelle passe le deuxième contact électrique (4), et
- l'évidement (29) est disposé dans une zone de bord dans laquelle la paroi de fond (21) et la paroi latérale (27) se rejoignent.

6. Contacteur de puissance (1) selon l'une quelconque des revendications précédentes, dans lequel l'évidement (29) est réalisé en tant que creux en forme de prisme à surface de base triangulaire.

7. Contacteur de puissance (1) selon l'une quelconque des revendications précédentes, dans lequel le capteur de température (12) est fixé au corps de boîtier au moyen d'un adhésif qui présente un coefficient de dilatation thermique identique ou similaire à celui du matériau du corps de boîtier (14) et est donc adapté à une dilatation thermique du corps de boîtier (14).

8. Procédé de fabrication d'un corps de boîtier (14) pour un dispositif de chambre de contact (9) d'un contacteur de puissance (1) selon l'une quelconque des revendications 1 à 7, dans lequel une ébauche de corps de boîtier pour le dispositif de chambre de contact (9) est fabriquée par pressage à sec d'une poudre céramique, dans lequel l'ébauche de corps de boîtier présente déjà l'évidement (29) pour recevoir le capteur de température (12), et l'ébauche de corps de boîtier est ensuite frittée.
